# EUROPEAN PATENT SPECIFICATION

(11) **EP 3 363 690 B1**
(45) Date of publication and mention of the grant of the patent: **29.01.2020**
(21) Application number: 17156980.9
(22) Date of filing: 20.02.2017
(51) Int. Cl.: B60R 22/20

(54) **AN ADJUSTABLE SUPPORT FOR SEAT BELTS**
ANPASSBARE UNTERSTÜTZUNG FÜR SICHERHEITSGURTE
SUPPORT RÉGLABLE POUR CEINTURES DE SÉCURITÉ

(43) Date of publication of application: 22.08.2018
(73) Proprietor: FCA Italy S.p.A., 10135 Torino (IT)
(72) Inventor: BISCI, Gabriella, 10135 Torino (IT)
(74) Representative: De Bonis, Paolo

(56) References cited:
- CN-A- 104 163 156
- DE-A1- 2 412 253
- DE-A1- 3 116 909
- DE-A1- 3 719 656
- DE-A1-102009 031 638
- JP-A- S5 938 156

## Description

### Field of the invention

The present invention relates to adjustable supports for seat belts, in particular of the type comprising:
- a slider configured for coupling with a loop for the routing of a seat belt ; and
- a guide path, which develops in a first direction of adjustment and is configured for guiding the slider in said first direction of adjustment, said slider having a plurality of operating positions along said first direction of adjustment.

Such supports are known, e.g., from CN 104 163 156, DE 37 19 656 A1, and DE 10 2009 031 638 A1.

### Prior art and general technical problem

The use of height-adjustable supports for seat belts is today a widespread measure employed on a vast range of currently produced motor vehicles. The belt support includes a slider connected to a loop, which is used for guiding and transmitting of the portion of belt that unwinds off the winder/pretensioner.

Adjustment of the vertical position of the slider is necessary for adapting the seat belt to users of different stature and build.

As the build of the occupants varies, as well as their height, and especially with motor vehicles in which the longitudinal range of adjustment of the front seats or rear seats is considerable and for vehicles that allow the occupants to assume very variable postures, vertical adjustment alone might not be sufficient.

### Object of the invention

The object of the present invention is to solve the aforementioned technical problems.

In particular, the object of the invention is to provide a support for seat belts that will enable adjustment of the belt according to the stature of the user and the characteristics of the seat to which it is associated.

### Summary of the invention

The object of the invention is achieved by an adjustable support for seat belts having the features forming the subject of the appended claims, which form an integral part of the technical disclosure provided herein in relation to the invention.

### Brief description of the drawings

The invention will now be described with reference to the annexed drawings, which are provided purely by way of non-limiting example and in which:
- Figure 1 is a schematic representation of a support for seat belts according to various embodiments of the invention;
- Figure 2 is a front view of a support according to an example not forming part of the invention, whereas Figures 2A and 2B are partial cross-sectional views corresponding to the trace II-II;
- Figure 3 is a view similar to that of Figure 2, but referred to an embodiment of the invention; and
- Figures 3A and 3B are cross-sectional views according to the traces IIIA-IIIA and IIIB-IIIB of Figure 3.

### Detailed description of embodiments of the invention

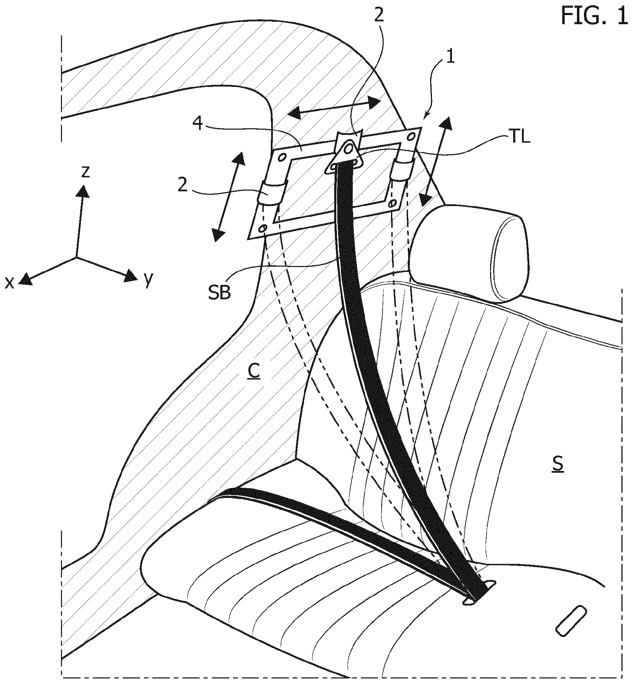

With reference to Figure 1, number 1 designates as a whole a support for seat belts according to various embodiments of the invention. The cartesian triad x-y-z appearing in the figure identifies three reference directions, namely, vertical (z), longitudinal (x), and transverse (y). These directions are reference directions also for the vehicle on which the seat belt fixed to the support according to the invention is installed.

The support 1 includes a slider 2, configured for coupling to a loop TL through which a stretch of seat belt SB is routed, and a guide path 4.

The guide path 4 develops in a first direction of adjustment and is configured for guiding the slider 2 in the first direction of adjustment, which in the case in point (and with respect to the vehicle) is the vertical direction z. The slider 2 has a plurality of operating positions in the first direction of adjustment z.

According to the invention, the guide path 4 moreover develops in a second direction of adjustment incident to the first direction of adjustment z, and in the case in point orthogonal to, and coincident with, the longitudinal direction x of the vehicle. The guide path 4 is hence configured for guiding the slider 2 in the second direction of adjustment x, along which the slider 2 has further operating positions.

In alternative embodiments, however, it is possible for the second direction of adjustment to present a component in the direction x, and a component in the direction z, being as a whole oblique.

The guide path 4 includes at least one first portion developing in the first direction of adjustment z, and second portions developing in the second direction of adjustment x.

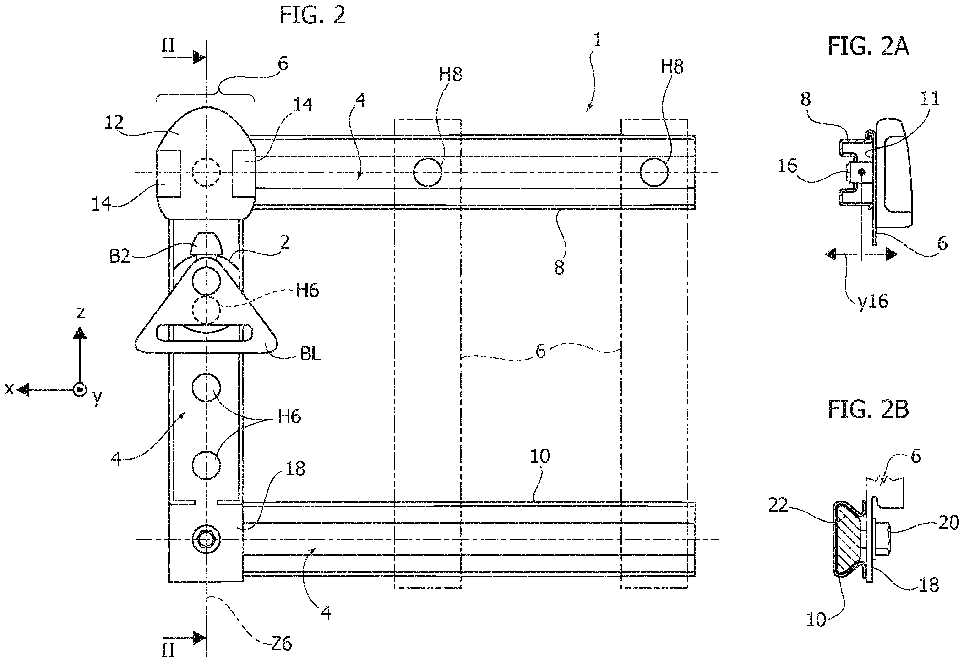

With reference to Figure 2, an example of the support according to the disclosure is designated once again by the reference number 1.

The example of Figure 2 is characterized in that the guide path is obtained by composition of different components, and is likewise used in a different way according to the movements described by the slider 2. Moreover fixed to the slider 2 is the loop TL.

In particular, the guide path 4 includes, as single first portion, a rectilinear vertical guide 6, slidably mounted within which is the slider 2, and, as second portions, a first rectilinear longitudinal guide 8 and a second rectilinear longitudinal guide 10, which are arranged parallel to one another and in which the guide 6 engages.

Conveniently, the ensemble comprising the vertical guide 6 and the slider 2 that is movable within it may be obtained by means of a height-adjustable support for seat belts: this is the case of the view of Figure 2, in which the slider 2 includes a push-button B2, which is configured for governing retraction, with respect to the plane of the guide 6 (the direction of retraction is orthogonal to and exits from the plane of the drawing), of a pin, which is in turn configured for engaging in through holes H6 of the guide 6, thus enabling adjustment of the position of the slider 2 along the guide 6 itself. When the push-button B2 is pressed, the pin is retracted and it is possible to shift the slider 2 between the operating positions corresponding to the holes H6; once the desired hole H6 is selected, the slider is fixed in position by releasing the push-button B2. Of course, the solution illustrated herein is provided purely by way of example: other types of vertical guide and fixing systems may be envisaged, as likewise other systems for release and subsequent blocking of the slider 2.

Located moreover at the ends of the guide 6 are the elements described in what follows.

Provided at a top end is a first supporting plate 11, installed on which is a further slider 12. The supporting plate 11 has an end edge turned back to engage with a corresponding lateral edge of the longitudinal guide 8.

The slider 12 is provided, by way of example, with two lateral push-buttons 14 which - once forced towards one another - bring about retraction of a pin 16. As may be seen in the cross-sectional view of Figure 2A, the pin 16 is configured for engaging, with modalities similar to those of the pin of the slider 2, in through holes H8 made in the longitudinal guide 8. The movement of the pin 16 is transverse as indicated by the reference Y16. In this connection, the longitudinal guide 8 has a substantially omega-shaped cross section in such a way that a raised central rib is defined that approaches the holes H8 to the slider 12.

Provided at the opposite end of the guide 6 is a second supporting plate 18 engaged in which is a screw 20, on which a sliding block 22 having a dove-tailed shape is in turn screwed. The same shape is reproduced on the cross section of the longitudinal guide 10 in such a way that the guide 6 can be withheld on the guides 8, 10 (by combination of the actions of the turned-back portion of the supporting plate 11 and of the sliding block 22). Preferentially, the supporting plates 18 and 11 are of different dimensions to prevent errors of assembly by the line operator.

In the support 1 of Figure 2, the slider 2 is mobile in the vertical direction z and in the longitudinal direction x. The two movements of the slider 2 are obtained by two distinct portions of the guide path 4 and by distinct components.

As regards the vertical movements (Z6), they are performed - as anticipated - by means of sliding of the slider 2 along the guide 6. To enable the slider 2 to be moved, the user will have to press the button B2 to disengage the pin from the holes H6, thus enabling sliding of the slider in the direction Z6. The position of the slider 2 in the embodiment illustrated herein is of a discrete type; i.e., it can only correspond to the positions of the holes H6. In variants, it is possible to use a positioning system with a finer resolution, in the limit of a continuous type.

The longitudinal movement is instead obtained by sliding of the entire guide 6, with the slider 2 (as well as with the slider 12 fixed with respect to the guide 6) thereon, along the longitudinal guides 8, 10. Sliding is obtained thanks to the couplings described above between the guide 6 and the guides 8, 10, and the operating positions of the slider 2 (and hence also of the slider 12) are also of a discrete type since they correspond to the positions of the holes H8. In variants, it is possible to use a positioning system with a finer resolution, in the limit of a continuous type. Once again as an alternative, it is possible to use retractile teeth on the supporting plate 11 (for example, by means of push-button control) that engage notches or a similar position reference on the guide 8.

To enable the slider 2 to be moved longitudinally, the user will have to press the push-buttons 14 simultaneously so as to cause retraction of the pin 16, thus disengaging it from the hole H8. Then, by moving the slider 12 in the longitudinal direction x, also longitudinal movement of the slider 2 that carries the loop TL will be obtained, hence enabling adjustment of the position of the belt SB in a longitudinal direction. The push-buttons 14 are provided in pairs for ergonomic reasons and to prevent any sticking or excessive or unbalanced loading. It is possible to replace the control with a single-push-button control for disengagement of the pin of the slider 12.

Basically, in this example, the combination of longitudinal and vertical movements is obtained by separation of the corresponding portions of the guide path 4 (the vertical portion on the guide 6, the longitudinal portion on the guides 8, 10), and by sliding of the guide 6 with the slider 2 thereon in a longitudinal direction.

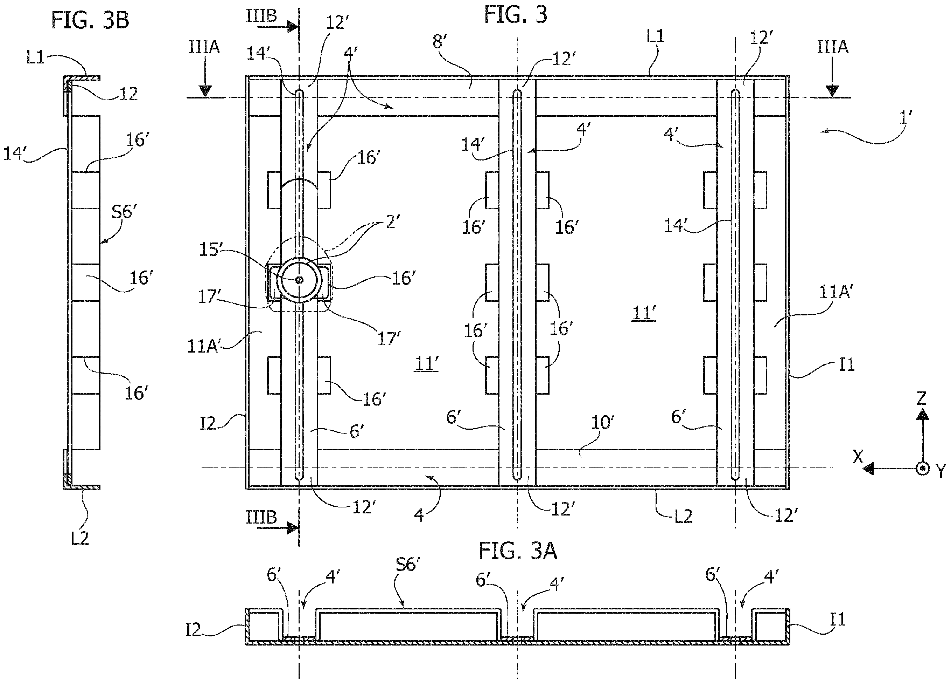

In the embodiment of the subsequent Figure 3, it is the slider 2' that causes the loop TL to accomplish both of the movements, i.e., the vertical one and the longitudinal one.

With reference to Figure 3, number 1' designates as a whole a support for seat belts according to the invention.

The support 1' includes a slider 2' configured for coupling to the loop TL, and a guide path 4', which includes, by way of example, three vertical guide stretches 6' as first portions and two horizontal guide stretches 8', 10' as second portions. The slider 2' is movable both along the first portions and along the second portions, as will now be described.

A fretted plate S6' defines two vertical bands 11' spaced apart by grooves that correspond to the stretches 6'. In each stretch 6' the plate S6' has vertical extensions 12' in the form of supporting plates.

Provided at each groove that defines a stretch 6' is a vertical slit 14', which functions as vertical guide element for the slider 2'.

In this connection, the slider 2' is provided with a pin 15', which engages in the slit 14' and is able to retract within the body of the slider 2 by push-button operation (the latter is not illustrated, but is per se known: it may, for example, be of the same type as the push-button B2). The edge of each band 11' is interrupted by a plurality of windows 16', which may be obtained, for example, by removal of a dihedral portion of material of the plate S6', in particular a portion with two orthogonal flaps set straddling the wall of the groove and the surface of the band 11'.

The windows 16' constitute a position reference for the slider 2 in the direction z and are arranged facing one another in pairs in such a way as to be aligned in the longitudinal direction in pairs (they are, of course, aligned also in the vertical direction z) .

In this way, the windows 16' provide a seat for engagement of a pair of longitudinal teeth 17', which are able to retract into the body of the slider 2' by action of a pair of push-buttons similar to the push-buttons 14 on the slider 12 of Figure 2. Coupling of the teeth 17' in the windows 16' enables fixing of the vertical position of the slider 2'.

In this embodiment, three pairs of windows 16' are represented for each groove 6' in such a way that the slider 2' has three (discrete) admissible vertical positions.

The longitudinal stretches 8', 10' of the guide path 4' are defined, in this embodiment, by coupling of a first L-shaped profile and a second L-shaped profile, which are designated by the references L1 and L2, respectively, with the flat members 12'. It should be noted that the profiles L1, L2 have, at the slits 14', a recess that prevents shortening of the path of the slits 14' themselves. Parallel to the stretches 6', the support 1 envisages a lateral closing by I-shaped profiles designated by the references I1 and I2. These I-shaped profiles may simply be a continuation bent at 90° of the L-shaped profiles, here one of the wings has been removed, which would enable creation of the flange of the plate S6' by means of just two elements.

The longitudinal stretches 8', 10' are hence comprised between a profile L1, L2 and the plate S6': it is possible to gain access to them with the slider 2', moving the latter along the slits 14' and the stretches 6'. To perform this movement, it is necessary to keep the teeth 17' in a retracted position. Once the slider 2' has reached a position corresponding to the supporting plate 12', the only possibility of passing to the contiguous stretches 6' (hence varying the operating position in the direction x) is to press also the push-button that retracts the pin 15', releasing the slider 2' from the constraint to the vertical movement determined by the slit 14'.

In this way, it is possible to bring the slider 2' into the contiguous stretch 6', releasing the push-button that actuates the pin 15' as soon as it reaches the area of the corresponding supporting plate 12' (the pin 15' in any case provides a haptic feedback when it engages the slit 14', so that even in the case where the push-button were to be released before this occurs, there would suffice a slight longitudinal movement of the slider 2' to cause engagement, the user being thus warned of the condition.

In the longitudinal movement along the stretch 8' (or identically 10'), the push-buttons that bring about retraction of the teeth 17' can be released, given that they do not interfere with the longitudinal movement. However, to bring the slider 2' into one of the vertical operating positions allowed, it will be necessary to press the push-buttons again to enable the slider 2' to enter the stretch 6' selected. It is moreover possible to provide one or more holes along the longitudinal portion of the guide path 4' that extends between two vertical portions 6' so as to be able to engage the pin 15' of the slider 2' therein and block the latter in a position longitudinally intermediate between two vertical portions 6'. These holes may be provided directly on the bottom of the profiles L1, L2, which remains exposed between the supporting plates 12'.

Hence, as anticipated, it is the slider 2' that directly performs the longitudinal and vertical movements. Intermediation of any further element is not required (as it is, instead, for the support 1 - see in particular the guide 6).

The support 1' of Figure 3 envisages, however, that to change the vertical stretch 6' the slider 2' must pass within one of the stretches 8', 10': direct passage from one stretch to the other is hence not possible.

In variants of the embodiment of Figure 3, there may in any case be envisaged the possibility of a change of guide stretch 6' without it being strictly necessary to pass through the stretches 8', 10': in particular, it is possible to provide an interruption of the bands 11' between adjacent vertical positions, defining in this way islands associated to the various vertical positions allowed. The slider 2' may be made to migrate between the islands exactly as described above, i.e., by retracting the pin 15' for disengagement from the slits 14' so that the slider can cover the stretches between the islands in question.

Of course, the details of construction and the embodiments may vary widely with respect to what has been described and illustrated herein, without thereby departing from the scope of the present invention, as defined by the annexed claims.

For instance, an embodiment may be envisaged like that of Figure 2', where the roles of the various components are - so to speak - reversed. In this embodiment, the guides 8, 10 are arranged in the vertical direction z (as first portions of the guide path), whilst the rectilinear guide 6 is set parallel to the longitudinal direction x (as single second portion of the guide path). In this way, the slider 2 performs autonomously adjustment of the position of the seat belt SB in the direction x moving within the guide 6, whereas for adjustment in height (direction z) it would be necessary to move the guide 6, with the slider 2 (and consequently the slider 12, in so far as it is fixed with respect to the guide 6) thereon, in the direction z. This embodiment may be provided by simply mounting the support 1 rotated through 90°, or else may be obtained - maintaining the setting of the support 1 - substantially *ad hoc,* for example by providing a guide 8 with a larger number of holes H8 and/or with a finer adjustment system for positioning of the slider 12 in order to increase the number of operating positions in the vertical direction z.

## Claims

1. An adjustable support (1') for seat belts, comprising:
- a slider (2') configured for coupling with a loop (TL) for the routing of a seat belt (SB); and
- a guide path (4', 6', 8', 10'), which develops in a first direction of adjustment and is configured for guiding the slider along said first direction of adjustment (z), said slider having a plurality of operating positions along said first direction of adjustment,
wherein said guide path (4', 6', 8', 10') develops in a second direction of adjustment (x), incident to said first direction of adjustment (z), and is configured for guiding the slider along said second direction of adjustment (x), said slider (2) having further operating positions along said second direction of adjustment (x),
wherein said second direction of adjustment (x) is orthogonal to said first direction of adjustment,
wherein said guide path (4', 6', 8', 10') includes at least one first portion (6') developing in said first direction of adjustment (z) and second portions (8', 10') developing in said second direction of adjustment (x),
the adjustable support (1') being **characterized in that** the slider (2') is engaged and movable along the first portions (6') and the second portions (8', 10'), and
**in that** along said first portions (6') the guide path (4') includes a plurality of discrete position references (16') configured for coupling with said slider (2') for defining operating positions in the first direction of adjustment (z).

2. The adjustable support (1') according to Claim 1, including a fretted plate (S6') defines two bands (11') spaced apart by grooves that correspond to stretches (6') defining the guide path, wherein in each stretch (6') the fretted plate (S6') has extensions (12') in the form of supporting plates.

3. The adjustable support (1') according to Claim 2, wherein provided at each groove that defines a stretch (6') is a slit (14'), which functions as vertical guide element for the slider (2').

4. The adjustable support (1') according to Claim 3, wherein the slider (2') is provided with a pin (15'), which engages in the slit (14') and is configured to retract within the body of the slider (2), wherein the edge of each band (11') is interrupted by a plurality of windows (16') providing position reference for the slider (2) in the vertical direction.

5. A motor-vehicle seat belt (SB) including:
- an adjustable support (1') according to any one of the preceding claims; and
- a loop (TL), in which the seat belt (SB) runs and which is coupled to said slider (2').

6. A vehicle including a seat belt according to Claim 5, wherein:
- said first direction of adjustment (z) is a vertical direction of the vehicle; and
- said second direction of adjustment (x) is a longitudinal direction of the vehicle.

## Patentansprüche

1. Verstellbare Halterung (1') für Sitzgurte, mit:
- einem Schiebeelement (2'), das zur Kopplung mit einer Öse (TL) für die Führung eines Sitzgurtes (SB) ausgebildet ist; und
- einem Führungskanal (4', 6', 8', 10'), der in einer ersten Verstellrichtung verläuft und ausgebildet ist, das Schiebeelement entlang der ersten Verstellrichtung (z) zu führen, wobei das Schiebeelement mehrere Betriebsstellungen entlang der ersten Verstellrichtung hat,
wobei der Führungskanal (4', 6', 8', 10') in einer zweiten Verstellrichtung (x), die die erste Verstellrichtung (z) schneidet, verläuft und ausgebildet ist, das Schiebeelement entlang der zweiten Verstellrichtung (x) zu führen, wobei das Schiebeelement (2) weitere Betriebsstellungen entlang der zweiten Verstellrichtung (x) hat,
wobei die zweite Verstellrichtung (x) senkrecht zu der ersten Verstellrichtung ist,
wobei der Führungskanal (4', 6', 8', 10') mindestens einen ersten Bereich (6'), der in der ersten Verstellrichtung (z) verläuft, und zweite Bereiche (8', 10'), die in der zweiten Verstellrichtung (x) verlaufen, aufweist,
wobei die verstellbare Halterung (1') **dadurch gekennzeichnet ist, dass** das Schiebeelement (2') mit den ersten Bereichen (6') und den zweiten Bereichen (8', 10') im Eingriff und entlang dieser bewegbar ist, und
dass der Führungskanal (4') entlang den ersten Bereichen (6') mehrere diskrete Positionsreferenzen (16') aufweist, die zur Kopplung mit dem Schiebeelement (2') zum Festlegen von Betriebsstellungen in der ersten Verstellrichtung (z) ausgebildet sind.

2. Verstellbare Halterung (1') nach Anspruch 1 mit einer unterteilten Platte (S6'), die zwei Bänder (11') begrenzt, die durch Nuten getrennt sind, die Streckenabschnitten (6') entsprechen, die den Führungskanal begrenzen, wobei in jedem Streckenabschnitt (6') die unterteilte Platte (S6') Erweiterungen (12') in Form von Halteplatten aufweist.

3. Verstellbare Halterung (1') nach Anspruch 2, wobei ein Einschnitt (14') an jeder Nut, die einen Streckenabschnitt (6') begrenzt, vorgesehen ist, wobei der Einschnitt als vertikales Führungselement für das Schiebeelement (2') dient.

4. Verstellbare Halterung (1') nach Anspruch 3, wobei das Schiebeelement (2') mit einem Stift (15') versehen ist, der in den Einschnitt (14') eingreift und ausgebildet ist, sich in den Körper des Schiebeelements (2) zurückzuziehen, wobei die Kante jedes Bandes (11') durch mehrere Fenster (16') unterbrochen ist, die eine Positionsreferenz für das Schiebeelement (2) in der vertikalen Richtung bereitstellen.

5. Sitzgurt (SB) für ein Motorfahrzeug, mit:
- einer verstellbaren Halterung (1') nach einem der vorhergehenden Ansprüche; und
- einer Öse (TL), in der der Sitzgurt (SB) geführt ist und die mit dem Schiebeelement (2') gekoppelt ist.

6. Fahrzeug mit einem Sitzgurt nach Anspruch 5, wobei:
- die erste Verstellrichtung (z) eine vertikale Richtung des Fahrzeugs ist; und
- die zweite Verstellrichtung (x) eine Längsrichtung des Fahrzeugs ist.

## Revendications

1. Support réglable (1') pour des ceintures de sécurité, comprenant :
- un élément coulissant (2') configuré pour être couplé à une boucle (TL) pour l'acheminement d'une ceinture de sécurité (SB) ; et
- un chemin de guidage (4', 6', 8', 10'), qui suit une première direction de réglage et est configuré pour guider l'élément coulissant le long de ladite première direction de réglage (z), ledit élément coulissant ayant une pluralité de positions de fonctionnement le long de ladite première direction de réglage,
dans lequel ledit chemin de guidage (4', 6', 8', 10') suit une deuxième direction de réglage (x), incidente par rapport à ladite première direction de réglage (z), et est configuré pour guider l'élément coulissant le long de ladite deuxième direction de réglage (x), ledit élément coulissant (2) ayant d'autres positions de fonctionnement le long de ladite deuxième direction de réglage (x),
dans lequel ladite deuxième direction de réglage (x) est orthogonale à ladite première direction de réglage,
dans lequel ledit chemin de guidage (4', 6', 8', 10') comporte au moins une première partie (6') suivant ladite première direction de réglage (z) et des deuxièmes parties (8', 10') suivant ladite deuxième direction de réglage (x),
le support réglable (1') étant **caractérisé en ce que** l'élément coulissant (2') est engagé et mobile le long des premières parties (6') et des deuxièmes parties (8', 10'), et
**en ce que** le long desdites premières parties (6') le chemin de guide (4') comporte une pluralité de références de positions discrètes (16') configurées pour se coupler audit élément coulissant (2') afin de définir des positions de fonctionnement dans la première direction de réglage (z).

2. Support réglable (1') selon la revendication 1, comportant une plaque chantournée (S6') qui définit deux bandes (11') espacées par des rainures qui correspondent à des étirements (6') définissant le chemin de guidage, dans lequel dans chaque étirement (6') la plaque chantournée (S6') a des extensions (12') sous la forme de plaques de support.

3. Support réglable (1') selon la revendication 2, dans lequel à chaque rainure qui définit un étirement (6') une fente (14') est prévue qui sert d'élément de guidage vertical pour l'élément coulissant (2').

4. Support réglable (1') selon la revendication 3, dans lequel l'élément coulissant (2') est muni d'une broche (15'), qui s'engage dans la fente (14') et qui est configurée pour se rétracter dans le corps de l'élément coulissant (2), dans lequel le bord de chaque bande (11') est interrompu par une pluralité de fenêtres (16') fournissant une référence de position pour l'élément coulissant (2) dans la direction verticale.

5. Ceinture de sécurité de véhicule automobile comportant :
- un support réglable (1') selon l'une quelconque des revendications précédentes ; et
- une boucle (TL) dans laquelle passe la ceinture de sécurité (SB) et qui est couplée audit élément coulissant (2').

6. Véhicule comportant une ceinture de sécurité selon la revendication 5, dans lequel :
- ladite première direction de réglage (z) est une direction verticale du véhicule ; et
- ladite deuxième direction de réglage (x) est une direction longitudinale du véhicule.
